Europäisches Patentamt

European Patent Office

Office européen des brevets

(19)

(11) Veröffentlichungsnummer: **0 158 040**
**B1**

(12) **EUROPÄISCHE PATENTSCHRIFT**

(45) Veröffentlichungstag der Patentschrift: **16.01.91**

(21) Anmeldenummer: **85101541.2**

(22) Anmeldetag: **13.02.85**

(51) Int. Cl.⁵: **H 01 B 3/44,** C 08 L 23/08,
C 08 K 3/22

(54) Flammwidrige Isoliermischung für Kabel und Leitungen.

(30) Priorität: **29.02.84 DE 3407414**

(43) Veröffentlichungstag der Anmeldung:
**16.10.85 Patentblatt 85/42**

(45) Bekanntmachung des Hinweises auf die
Patenterteilung:
**16.01.91 Patentblatt 91/03**

(84) Benannte Vertragsstaaten:
**AT CH DE GB LI SE**

(56) Entgegenhaltungen:
EP-A-0 004 017     EP-A-0 077 055
EP-A-0 031 637     FR-A-2 394 574

PATENTS ABSTRACTS OF JAPAN, Band 4, Nr.
50 (C-7)532r; & JP - A - 55 23 138

PATENTS ABSTRACTS OF JAPAN, Band 8, Nr.
172 (C-237)1609r, 9. August 1984; & JP - A - 59
71 346

PATENTS ABSTRACTS OF JAPAN, Band 3, Nr.
19 (C-37), 17. Februar 1979, Seite 5 C37; & JP - A
- 53 141 353

(73) Patentinhaber: **ALCATEL N.V.**
**Strawinskylaan 537 (World Trade Center)**
**NL-1077 XX Amsterdam (NL)**
(84) **CH GB LI SE AT**

(73) Patentinhaber: **kabelmetal electro GmbH**
**Kabelkamp 20**
**D-3000 Hannover 1 (DE)**
(84) **DE**

(72) Erfinder: **Klett, Thomas Andreas**
**Im Grigis 10**
**D-7147 Murr (DE)**
Erfinder: **Widler, Hansjörg, Dr.**
**Badstrasse 27**
**D-7000 Stuttgart 50 (DE)**

(74) Vertreter: **Mende, Eberhard, Dipl.-Ing. et al**
**kabelmetal electro GmbH Kabelkamp 20**
**Postfach 260**
**D-3000 Hannover 1 (DE)**

Courier Press, Leamington Spa, England.

**Beschreibung**

Die Erfindung bezieht sich auf eine flammwidrige Mischung zur Isolierung von elektrischen Kabeln und Leitungen, enthaltend Copolymere aus Äthylen und Acrylsäureestern und Aluminiumhydroxid.

Aus der EP—A—0004017 sind flammwidrige Mischungen bekannt, die zur Isolierung von elektrischen Kabeln und Leitungen dienen und welche u.a. Copolymere aus Äthylen und Acrylsäureestern, sowie einen flammhemmenden Füllstoff enthalten. Als flammhemmender Füllstoff für Isoliemischungen von Kabeln und Leitungen wird weitgehend Aluminiumhydroxid verwendet. Diese Isoliermischungen werden haupatsächlich durch Extrudieren verarbeitet.

Wenn Kabelanschlüsse nach dem sogenannten Termipoint-Verfahren hergestellt werden, müssen die Isolierwerkstoffe jedoch ganz bestimmte Kriterien erfüllen. Bei diesem Verbindungsverfahren werden mit einem speziellen Werkzeug auf die zu verbindenden Adern Verbindungsclips aufgepreßt, so daß eine Druckverschweißung zwischen den miteinander zu verbindenden Leitern hergestellt wird. Bei diesem Verfahren ist eine vorherige Abisolierung des Kabelendes nicht erforderlich, weil durch das Werkzeug gleichzeitig die Aderisolierung eingeschnitten und abgestreift wird.

Dieses Verfahren kann man beispielsweise bei Adern mit PVC-Umhüllung anwenden. Kabelisolierungen, die durch peroxidisches Vernetzen oder Strahlenvernetzen hergestellt wurden, eignen sich teilweise für dieses Anschlußverfahren. Die bekannten halogenfreien, gefüllten, flammwidrien Thermoplaste eignen sich jedoch nicht für die Termipoint-Anschlußtechnik. Nur einige vernetzte Werkstoffe können eingesetzt werden. Es wurde festgestellt, daß die Isolierung von Adern, die sich für die oben genannte Anschlußtechnik eignen sollen, außer der niedrigen Weiterreißfestigkeit auch eine geringe Dehnung und eine hohe Shorehärte haben müssen.

Aufgabe der Erfindung ist es, eine termipointierbare, flammwidrige Mischung zur Isolierung von elektrischen Kabeln und Leitungen anzugeben, bei der eine Vernetzung nicht erforderlich ist.

Diese Aufgabe wird durch die im Kennzeichen des Anspruchs 1 genannten Mischungen gelöst.

Vorteilhafte Weiterbildungen der Erfindung können den Unteransprüchen entnommen werden.

Die Isoliermischungen gemäß der Erfindung enthalten 40 Gewichtsteile eines Copolymeren von Äthylen mit einem Acrylsäureester mit einem Äthylenanteil von 70 bis 95%, 100 bis 170 Gewichtsteile Aluminiumhydroxid und gegebenenfalls weitere Stoffe in einer Menge von zusammen höchstens 70 Gewichtsteilen.

Als Acrylsäureester wird vorzugsweise Butylacrylat verwendet.

Wesentlich ist auch der oben genannte hohe Anteil an Äthylen.

Um die Mischung besser extrudierbar zu machen, können bis zu 60 Gewichtsteile eines Copolymeren aus Äthylen und Vinylacetate, mit einem Vinylacetatgehalt von 10 bis 30%, zugesetzt werden. Durch diesen Zusatz wird die Mischung auch flexibler, ohne daß die gewünschten Eigenschaften, insbesondere der niedrige Weiterreißwiderstand, wesentlich beeinträchtigt werden.

Bei den Mischungen gemäß de Erfindung wurde ein Weiterreißwiderstand von etwa 1,5 N/mm erzielt. Bei den bekannten Mischungen auf der Basis von Äthylen-Vinylacetate liegt die Weiterreißfestigkeit deutlich höher, z.B. bei etwa 10,0 N/mm.

Nachfolgend wird ein bevorzugtes Ausführungsbeispiel für die Isoliermischung gemäß der Erfindung angegeben.

Es wird eine Isoliermischung hergestellt aus 60 Gewichtsteilen eines Copolymeren aus Äthylen und Vinylacetate mit einem Vinylacetatgehalt von 28%, 40 Gewichtsteilen eines Copolymeren aus Äthylen und Butylacrylat mit einem Butylacrylatgehalt von 19%, 150 Gewichtsteilen Aluminiumhydroxid, 1 Gewichtsteil Alterungsschutzmittel und 0,3 Gewichtsteilen Metalldesaktivator.

Die genannte Isoliermischung hatte eine Festigkeit von 8,5 N/mm², eine Bruchdehnung von 150% und einen Sauerstoffindex von 29%.

Die Mischung hat auch gegen die Walzfellrichtung niedrige Werte des Weiterreißwiderstandes und eignet sich sehr gut für das oben genannte Termipoint-Verbindungsverfahren, ohne daß eine Vernetzung der Mischung erforderlich ist.

**Patentansprüche für die Vertragstaaten: CH/LI DE GB SE**

1. Flammwidrige Mischung zur Isolierung von elektrischen Kabeln und Leitungen, enthaltend Copolymere aus Äthylen und Acrylsäureester und Aluminiumhydroxid, dadurch gekennzeichnet, daß die Mischung aus 40 Gewichtsteilen eines Copolymeren von Äthylen und Butylacrylat, mit einem Äthylenanteil von 70 bis 95%, 100 bis 170 Gewichtsteilen Aluminiumhydroxid, bis zu 60 Gewichtsteilen eines Copolymeren aus Äthylen und Vinylacetat, mit einem Vinylacetatgehalt von 10 bis 30%, 1 Gewichtsteil eines Alterungsschutzmittels und 0,3 Gewichtsteile eines Metalldesaktivators besteht.

2. Isoliermischung nach Anspruch 1, dadurch gekennzeichnet, daß sie 60 Gewichtsteile eines Copolymeren aus Äthylen und Vinylacetat, mit einem Vinylacetatgehalt von 28%, und 150 Gewichtsteile Aluminiumhydroxid enthält, und daß im Copolymeren aus Äthylen und Butylacrylat der Butylacrylatgehalt 19% beträgt.

**Patentansprüche für die Vertragsstaat: AT**

1. Verwendung einer flammwidrigen Mischung zur Isolierung von elektrischen Kabeln und Leitungen, enthaltend Copolymere aus Äthylen und Acrylsäureester und Alukminiumhydroxid, dadurch gekennzeichnet, daß die Mischung aus 40 Gewichtsteilen eines Copolymeren von Äthylen und Butylacrylat, mit einem Äthylenanteil von 70 bis 95%, 100 bis 170 Gewichtsteilen Aluminiumhydroxid, bis zu 60 Gewichtsteilen eines Copolymeren aus Äthylen und Vinylacetat, mit einem Vinylacetatgehalt von 10 bis 30%, 1 Gewichtsteil eines Alterungsschutzmittels und 0,3 Gewichtsteile eines Metalldesaktivators besteht.

2. Verwendung nach Anspruch 1, dadurch gekennzeichnet, daß die Isoliermischung 60 Gewichtsteile eines Copolymeren aus Äthylen und Vinylacetat, mit einem Vinylacetatgehalt von 28%, und 150 Gewichtsteile Aluminiumhydroxid enthält, und daß im Copolymeren aus Äthylen und Butylacrylat de Butylacrylatgehalt 19% beträgt.

**Revendications pour les Etats contractants: CH LI DE GB Se**

1. Composition antiflamme pour l'isolation de câbles et de conduites électriques, cette composition comportant des copolymères d'éthylène et d'ester d'acide acrylique, et de l'hydroxyde d'aluminium, cette composition étant caractérisée par le fait qu'elle est constituée de 40 parties en poids d'un copolymère d'éthylène et d'acrylate de butyle avec une proportion d'éthylène de 70 à 95%, de 100 à 170 parties en poids d'hydroxyde d'aluminium, d'au plus 60 parties en poids d'un copolymère d'éthylène et d'acétate de vinyle, avec une teneur en acétate de vinyle de 10 à 30%, d'une partie en poids d'un élément antivieillissement et de 0,3 partie en poids d'un désactivateur métallique.

2. Composition isolante selon la revendication 1, caractérisée par le fait qu'elle comporte 60 parties en poids d'un copolymère d'éthylène et d'acétate de vinyle, avec une teneur en acétate de vinyle de 28%, et 150 parties en poids d'hydroxide d'aluminium, et que, dans le copolymère d'éthylène et d'acrylate de butyle, la teneur en acrylate de butyle est de 19%.

**Revendications pour l'Etat contractant: AT**

1. Utilisation d'une composition pour l'isolation de câbles et de conduites électriques, cette composition comportant des copolymères d'éthylène et d'ester d'acide acrylique, et de l'hydroxyde d'aluminium, cette composition étant caractérisée par le fait que la composition est constituée de 40 parties en poids d'un copolymère d'éthylène et d'acrylate de butyle avec une proportion d'éthylène de 70 à 95%, de 10 à 170 parties en poids d'hydroxyde d'aluminium, d'au plus 60 parties en poids d'un copolymère d'éthylène et d'acétate de vinyle, avec une teneur en acétate de vinyle de 10 à 30%, d'une partie en poids d'un élément antivieillissement et de 0,3 partie en poids d'un désactivateur métallique.

2. Utilisation selon la revendication 1, caractérisée par le fait que la composition isolante comporte 60 parties en poids d'un copolymère d'éthylène et d'acétate de vinyle, avec une teneur en acétate de vinyle de 28%, et 150 parties en poids d'hydroxide d'aluminium, et que, dans le copolymère d'éthylène et d'acrylate de butyle, la teneur en acrylate de butyle est de 19%.

**Claims for the Contracting States: CH LI DE GB SE**

1. Flame-retardant composition for insulating electrical cables and conductors, containing copolymers from ethylene and acrylic acid ester and aluminium hydroxide, characterized in that the composition consists of 40 parts by weight of a copolymer of ethylene and butyl acrylate, with an ethylene proportion 70 to 95%, 100 to 170 parts by weight of aluminium hydroxide, up to 60 parts by weight of a copolymer from ethylene and vinyl acetate, with a vinyl acetate content of 10 to 30%, 1 part by weight of an anti-ageing agent and 0.3 parts by weight of a metal deactivator.

2. Insulating composition as claimed in Claim 1, characterized in that the composition contains 60 parts by weight of a copolymer from ethylene and vinyl acetate, with a vinyl acetate content of 28%, and 150 parts by weight of aluminium hydroxide, and that in the copolymer from ethylene and butyl acrylate the butyl acrylate content is 19%.

**Claims for the Contracting State: AT**

1. Use of a flame-retardant composition for insulating electrical cables and conductors, containing copolymers from ethylene and acrylic acid ester and aluminium hydroxide, characterized in that the composition consists of 40 parts by weight of a copolymer of ethylene and butyl acrylate, with an ethylene proportion of 70 to 95%, 100 to 170 parts by weight of aluminium hydroxide, up to 60 parts by weight of a copolymer from ethylene and vinyl acetate, with a vinyl acetate content of 10 to 30%, 1 part by weight of an anti-ageing agent and 0.3 parts by weight of a metal deactivator.

2. Use as claimed in Claim 1, characterized in that the insulating composition contains 60 parts by weight of a copolymer from ethylene and vinyl acetate, with a vinyl acetate content of 28%, and 150 parts by weight of aluminium hydroxide, and that in the copolymer from ethylene and butyl acrylate the butyl acrylate content is 19%.